# EUROPEAN PATENT SPECIFICATION

(11) **EP 2 492 134 B1**
(45) Date of publication and mention of the grant of the patent: **09.08.2017**
(21) Application number: 12153844.1
(22) Date of filing: 03.02.2012
(51) Int. Cl.: B60L 11/18, H01R 13/447, H01R 13/62, H01R 13/639

(54) **Power socket assembly for recharging the batteries of electric vehicles**
Steckdosenbaugruppe zum Wiederaufladen von Batterien von elektrischen Fahrzeugen
Ensemble de prise électrique pour recharger les batteries de véhicules électriques

(30) Priority: 04.02.2011 IT TO20110092
(43) Date of publication of application: 29.08.2012
(73) Proprietor: Schneider Electric Industries SAS, 92500 Rueil-Malmaison (FR)
(72) Inventor: Magno, Giorgio, 24030 Brembate Sopra (Bergamo) (IT); Rocchini, Matteo, 24122 Bergamo (IT); Marchesi, Diego, 24066 Pedrengo (Bergamo) (IT)
(74) Representative: Fioravanti, Corrado

(56) References cited:
- DE-A1-102007 002 025
- FR-A1- 2 754 644
- FR-A3- 2 925 458
- US-A1- 2009 286 414
- US-A1- 2010 013 433

## Description

The present invention relates to a power socket assembly of a charging station for recharging the batteries of electric vehicles.

A power socket assembly according to the preamble of claim 1 is disclosed in FR 2 754 644 A1 and in DE 10 2007 002025 A1.

Recharging stations with electric power supply sockets to which electrically driven and/or hybrid motor vehicles and motorcycles can be connected are becoming increasingly common. The power socket, in particular if the recharging station is a public station, is usually protected by a hinged or sliding lid which is able to prevent access to the socket when recharging is not authorized. For safety reasons, the sockets are associated with two releasable locking devices, each having a respective actuator: a first locking device which includes a first latch for temporarily locking the plug connected to the vehicle while the plug is inserted in the socket during recharging; a second locking device which includes a second latch able to keep the hinged lid in the closed position. In other solutions a bistable actuator is used, but this requires an associated back-up battery in order to be able to release the plug should there be a blackout during recharging.

An object of the invention is to provide a more versatile and simplified socket assembly composed of a smaller number of components than in the prior art. Another object of the invention is to provide a socket assembly capable of releasing the plug of the vehicle and protecting the socket also in the absence of electric power (blackout) without back-up batteries or other power sources.

These and other objects and advantages, which will be understood more clearly below, are achieved according to the present invention by a charging station for recharging electric vehicle batteries comprising a socket assembly as defined in the accompanying claims.

The features and advantages of the invention will become clear from the detailed description of an exemplary embodiment thereof, with reference to the accompanying drawings which are provided by way of a non-limiting example and in which:
Figures 1 and 2 are perspective views, from different viewpoints, of an embodiment of a socket assembly according to the invention;
Figure 3 is an exploded perspective view of the socket assembly according to Figures 1 and 2;
Figures 4, 5, 6 and 7 are vertically sectioned views which show the socket assembly in four different operating conditions; and
Figures 4A to 7A are views, on a larger scale, of details of Figures 4-7, respectively.

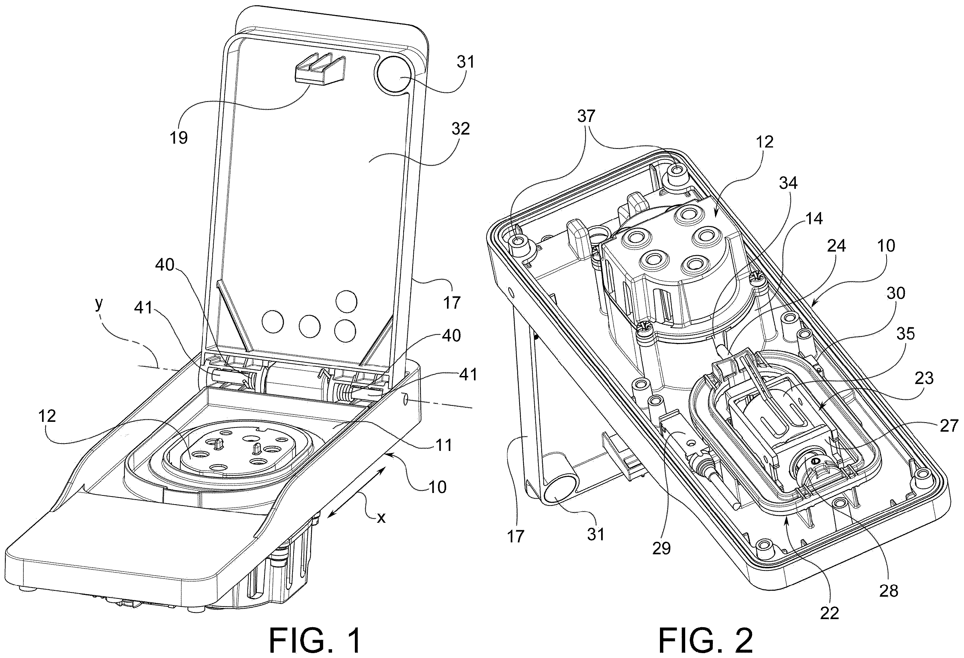

With reference initially to Figures 1 to 3, a charging station for recharging electric vehicle batteries comprises a power socket assembly with a frame (or flange) 10 having the overall shape of a rectangular plate which extends in the direction x and which, during use, is vertical. Designated 11 is an outer side of the frame, i.e. a side able to be directed outwards (and therefore towards the user) in the condition where the socket assembly is mounted on a stationary recharging apparatus (not shown) typically a column or an electric panel. In the present description and in the claims which follow, the terms "outer" and "inner" are to be understood with reference to an observer who is standing opposite a socket assembly mounted on an apparatus or a vertical wall, herein termed "charging station".

The frame 10, which is preferably made of plastic, provides centrally a power socket 12 of the standard type (in this case "type 3" complying with the Standard IEC 62196-1 - ED.1 E IEC 62196-2 ED.2) which will not be described here in detail. The frame 10 has, formed centrally therein, a through-opening 13 surrounded by a wall 14 of corresponding shape which projects from the inner side 15. The opening 13 with the wall 14 form together a receiving seat inside which the body of the socket 12 is fixed by means of screws 16.

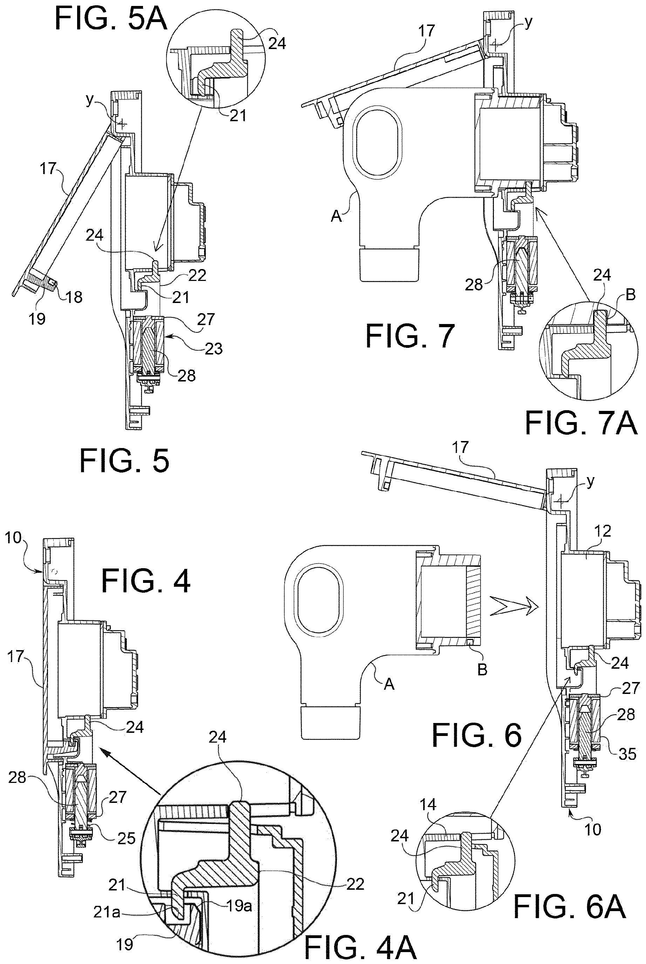

A hinged lid or flap 17 is hinged, about a horizontal axis y, to an upper part of the frame 10 and is able to assume alternately a vertical closed position (shown in Figure 4) covering the socket 12 and a raised position where the socket is uncovered. The lid 17 is associated with one or more resilient means 40 (figure 1) which urge the lid towards its closed, vertical position (figure 4), in which it covers the socket 12. In the preferred embodiment shown in the drawings, the resilient means 40 comprise a pair of helical springs mounted on cylindrical hinges or pins 41 aligned along the axis y. In the vicinity of the free end of the lid 17, on the side 32 of the latter which in the closed condition faces the socket, the lid forms an engaging seat 18 which is open towards the hinging axis y. In the closed lid condition (Figure 4) the seat 18 is directed upwards. The seat 18 is formed, in this example, by a protuberance 19 having the form of a hook and has the function of engaging with a locking tooth 21 when the latter is in a lowered position in order to prevent access to the socket, as explained further below.

A vertically displaceable latch body 22 and an associated linear actuator of the electromechanical solenoid type 23 are mounted on the inner side 15 of the frame, underneath the opening 13 for the socket.

The latch body 22 has joined thereto, preferably formed as one piece, both the locking tooth 21 which has the function of locking the lid 17 and a further pin-like locking element 24 projecting vertically form the top part of the latch 22 so as to fix a plug A when the latter is inserted into the plug receiving seat during electrical recharging (Figure 7).

The locking tooth 21 extends downwards, while the locking pin 24 extends upwards, in a direction parallel to (or coinciding with) the direction in which the tooth 21 extends, but in the opposite sense. In the particular embodiment shown, the locking elements 21 and 24 are vertically unaligned. In further variants of the invention (not shown) these elements may be aligned along a same straight line.

In the embodiment shown, the latch 22 is formed as an essentially rectangular rim which surrounds the solenoid actuator 23 and receives a resilient thrust directed downwards from a compression spring 25 arranged between a bottom portion 26 of the latch and a box 27 which houses the solenoid windings and is fixed to the frame 10.

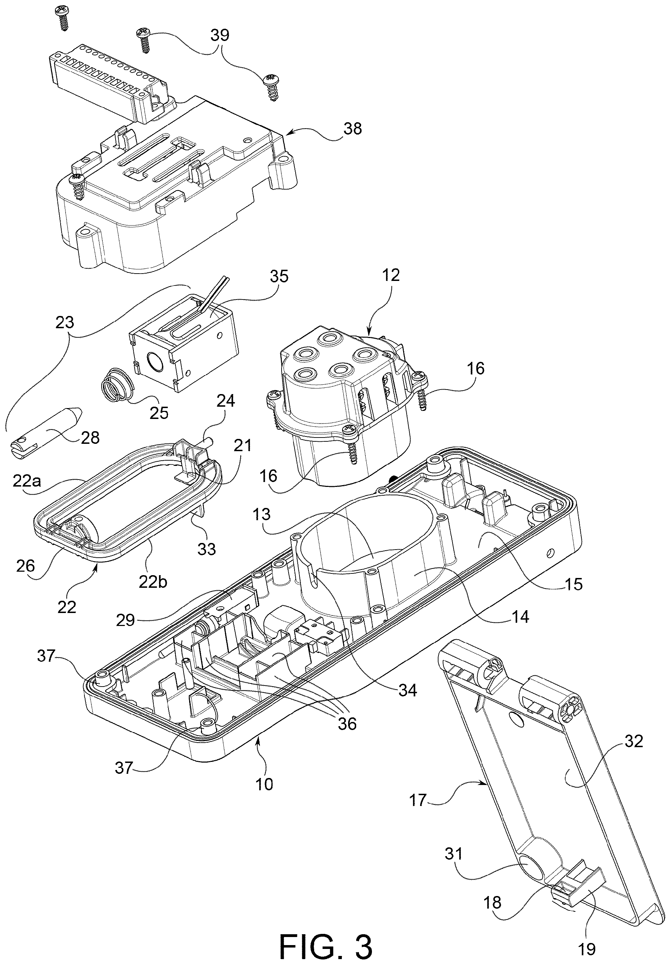

Formations 36 project from the inner side 15 of the frame and are designed to guide the alternating linear movement of the latch 22 in the vertical direction. The latch 22 has a shape which is essentially symmetrical with respect to the line of action of the armature 28, with two opposite parallel straight sections 22a, 22b which, guided by the formations 36, ensure balanced and even sliding movements, preventing jamming. Further guiding formations (not shown) are provided on a cover 38 (visible in Figure 3) which is fixed for example by means of screws 39 to the frame 10. In addition to acting as a guide for the latch 22, the cover 38 encloses and protects the entire actuator 23 and the latch 22 in order to improve assembly of these components together with the frame 10, in a single operation, on the recharging station.

The linear actuator of the electromechanical solenoid type 23 comprises a solenoid 35 and an armature or core 28 movable vertically as a result of the electromagnetic induction produced by the solenoid windings when energized. The movable armature or element 28 is connected to the bottom portion 26 of the latch 22 so as to cause raising thereof when the solenoid is energized.

A sensor 29 for detecting when the lid is closed and a microswitch 30 for detecting locking of the socket are fixed on the inner side 15 of the frame. The sensor 29 consists preferably of an induction proximity sensor able to detect the presence of a metal body 31 fixed onto the inner side 32 of the lid, when the latter is in the closed position. The microswitch 30 is able to be actuated by a projection 33 integral with the latch 22 when the latter assumes its upper position which causes locking of the plug A by means of the locking pin 24. The latch 22 is intended to act alternately on the plug A and on the lid 17, locking and releasing them with respect to each other, as explained further below. The pin-like locking element 24 is designed to penetrate through an opening 34 formed in the wall 14 of the socket and engage in a standard hole B of the plug A, thus preventing the plug from being extracted from the socket for as long as the power is supplied.

The movement of the armature of the actuator 23, and therefore the latch 22, is produced by the action of electric control signals emitted by a processor (not shown) forming part of the power station. The processor is electrically connected to the solenoid 35, microswitch 30, proximity sensor 29 and a pair of standard control contacts (not shown) provided in the socket for detecting the insertion of the plug pins. The processor, which manages operation of the socket assembly as a whole and also supplying of the power, is electrically connected to one or more identification/enabling devices such as an RFID receiver, for those applications where the power station is public. Both the control contacts and the microswitch 30 and the proximity sensor 29 are known in the art and do not need to be described here in detail.

The operating sequence of the socket assembly is now described. Initially the recharging station is locked in the closed condition by the latch 22 (Figure 4). The lid 17 is in its lowered and closed position locked by the locking tooth 21 of the latch which is pushed downwards by the action of the spring 25 and kept stably engaged inside the seat 18, without there being any power consumption. The solenoid 35, which controls the movements of the latch, is not energized. The plug locking pin 24, being in the lowered position, does not project inside the receiving seat of the socket (Figure 4A) .

When a user obtains authorization to perform recharging, for example following identification by means of an RFID card or by paying the recharging fee, the processor enables sending of power to the solenoid 35 so as to extend the armature 28 and lift the latch 22 against the resilient action of the spring 25.

Upon raising, the latch 22 disengages the locking tooth 21 from the seat 18 of the lid so that the user is able to open the latter. In this position (Figure 5) the latch is raised and the locking pin 24 projects inside the receiving seat of the socket (Figure 5A). As soon as the proximity sensor 29 detects that the metal body 31 on the lid 17 has moved away and therefore the lid has been opened, the station interrupts the power supply to the solenoid so as to allow the spring 25 to move the latch back into the lowered position, in order to retract the locking pin 24 from the receiving seat of the socket and thus allow insertion of the plug A in the socket (Figures 6 and 6A).

When the plug is inserted, the control contacts (not shown) of the socket send a "plug inserted" signal to the processor which, in response to this signal, sends again power to the solenoid 35, causing raising of the latch 22 and inserting the locking pin 24, in the raised position, inside the retaining hole B provided in the body of the plug A (Figures 7 and 7A). The upwards movement of the latch causes activation of the microswitch 30 by the projection 33. The processor then receives and processes two signals: the "plug inserted" signal generated by the control contacts and the "plug locked" signal generated by the microswitch 30. When these two signals are received and processed, the processor establishes that the plug is locked correctly in the socket. When this condition is detected, the recharging station activates the power supply to the socket in order to recharge the battery. While the battery is being recharged, the solenoid 35 is powered and the latch 22 is still in the raised position, locking the plug in the socket; the spring 25 is compressed.

When recharging has been completed, by means of a keypad (not shown) or other means such as an RFID receiver, the user issues a consent command to the recharging station at the end of power supplying. After interrupting the supply of power to the socket, the station also interrupts the power supply to the solenoid. The spring 25 is free to distend and causes lowering of the latch, the locking pin 24 being retracted from the plug retaining hole B. The plug may now be extracted from the socket. By means of the control contacts, extraction of the plug is signalled to the processor which enables again the sending of power to the solenoid in order to raise the latch and allow the lid 17 to close against the frame 10. When the sensor 29 detects the closed lid condition and signals it to the processor, the power supply to the solenoid is definitively interrupted so as to allow the latch to be lowered and lock the lid in the initial closed position (Figure 4).

The closure movement of the lid 17 is assisted by the springs 40. It will be observed that the tooth 21 is preferably beveled at its outwardly facing end portion 21a, and that an end 19a of the hook protuberance 19 is correspondingly beveled, according to oblique planes inclined downwards and towards the inside of the charging station. As the lid closes, the beveled portion 19a of the hook abuts against the beveled portion 21a of the latch, lifting the latter against the resilient bias of the spring 25. Then the tooth 21 snaps down into the seat 18, keeping the lid closed. Owing to this arrangement, the lid 17 can be closed so as to protect the socket 12 also in case the charging station is temporarily not being supplied with electric power (blackout). As an alternative to the illustrated bevels, one or both of the portions 19a, 21a may be rounded or otherwise shaped such that the abutment of the lid that is being closed causes the latch 22 to lift temporality and then lets it return immediately in its lowered position (figure 4A) that keeps the lid closed.

As will be appreciated, the invention offers various advantages compared to the prior art. Savings may be achieved in terms of components and the management, assembly and electrical connection costs owing to the fact that the assembly includes a single actuator device which is operationally connected to a single latch body which has two separate locking elements, i.e. one for the plug and one for the lid, respectively. The latch and its actuator are preassembled on the frame and closed by the cover 38 so that the entire assembly may then be fitted in a single operation on the power supply apparatus, using advantageously a number of screws which can be inserted into cylindrical seats 37 in the four corners of the frame. The assembly may be installed virtually on any type of recharging apparatus. The arrangement of the electromechanical-solenoid linear actuator underneath the socket allows the overall width of the socket assembly to be reduced. A same assembly may be provided with different socket designs. When the station is not performing a recharging operation the lid of the socket remains locked in the closed position without any power consumption. In the event of an interruption in the power supply (blackout) to the recharging station the power to the solenoid which keeps the latch in the plug locked position is also interrupted so that the plug may be extracted and the vehicle is free to move off again. On the other hand, the use of a bistable solenoid, according to the prior art, requires a back-up battery in order to be operated and release the plug in the event of a blackout. In other words, the non-supplying or deactivated position, where there is no power, is the only stable position (monostable condition). In addition, while in a bistable solenoid actuator, locking is performed by the force of a magnet, the monostable actuator is kept in the non-supplying position by a spring and consequently it is more difficult for it to be released by means of possible knocks.

Although an exemplary of embodiment has been illustrated in the above detailed description, it should be understood that a large number of variants are possible. It should also be understood that the embodiment shown constitutes just one example and is not to be regarded as limiting in any way the scope, applicability or configuration. For example, the type of socket may differ from the "type 3" illustrated here. The above drawings and detailed description, however, will provide persons skilled in the art with a convenient guide for implementing the invention, it being understood that various modifications may be made to the functions and configuration of the parts described in the example of embodiment, without departing from the scope of the invention as defined in the accompanying claims.

## Claims

1. Power socket assembly of a charging station for recharging the batteries of electric vehicles, comprising:
a lid (17) hinged about an axis (y) so as to cover a socket (12);
a first locking element (24) for locking a plug (A) inserted in the socket (12) during recharging;
a second locking element (21) for releasably locking the lid (17) in a closed position covering the socket (12);
actuator means for moving the first and the second locking elements between locked positions, in which the locking elements are engaged with the plug and the lid, and released positions, in which the locking elements are disengaged from the plug and the lid;
the actuator means comprising a single linear actuator (23),
the first locking element (24) and the second locking element (21) being both integral with a single latch (22) controlled by the actuator (23), the first locking element (24) extending towards the axis (y) and the second locking element (21) extending in an opposite direction, away from the axis (y);
**characterized in that**
the locking elements (24, 21) are configured in such a way that when the first element (24) is in the locked position, the second element (21) is in the released position, and vice versa.

2. Socket assembly according to Claim 1, **characterized in that** the hinged lid (17) is hinged about the axis (y) at an upper end of a support frame (10) which provides the socket (12) or at least one seat (13, 14) for mounting the socket (12) and that the linear actuator (23) and the latch (22) are mounted on the frame, below the socket.

3. Socket assembly according to Claim 2, wherein the first locking element (24) extends upwardly from an upper portion of the latch (22) and the second locking element (21) extends downwardly from an upper portion of the latch (22).

4. Socket assembly according to Claim 2 or 3, **characterized in that** the latch (22) is shaped in the manner of an essentially rectangular rim slidably mounted on a side (15) of the frame (10) around the linear actuator (23).

5. Socket assembly according to Claim 4, **characterized in that** the latch (22) has a shape essentially symmetrical with respect to the line of action of the linear actuator (23).

6. Socket assembly according to any one of the preceding claims, **characterized in that** the first locking element (24) and the second locking element (21) are formed as one piece with the latch (22).

7. Socket assembly according to any one of the preceding claims, **characterized in that** the linear actuator (23) is a linear actuator of the electromechanical solenoid type.

8. Socket assembly according to Claim 7, **characterized in that** the linear actuator of the electromechanical solenoid type comprises a solenoid (35) and a mobile armature (28) connected to a lower portion (26) of the latch (22) so as to cause lifting thereof when the solenoid is energized.

9. Socket assembly according to any one of the preceding claims, **characterized in that** it comprises a spring element (25) exerting on the latch (22) a force that is directed away from the socket (12) for disengaging the first locking element (24) from the plug (A) and engaging the second locking element (12) in a seat (18) of the lid (17).

10. Socket assembly according to Claim 9, **characterized by** further comprising a beveled or rounded portion (19a, 21a) on the latch (22) and/or the lid (17), whereby a closing movement of the lid entails the abutment of the beveled or rounded portion between the latch and the lid, as a result of which the latch is lifted against the bias of the spring element and then the second locking element (21) engages the seat (18) of the lid (17).

11. Socket assembly according to Claim 2, **characterized in that** the following are also fixed on the frame (10):
- a sensor device (29) which interacts with an element (31) fixed to the lid (17), for detecting the open/closed condition of the lid;
- a switch device (30) able to be switched by the latch (22), when the latch reaches the position corresponding to locking of the first locking element (24) in the plug (A).

12. Socket assembly according to Claim 11, **characterized in that** the latch (22) also has a projection (33) for actuating the switch device (30).

13. Charging station for recharging batteries of electric vehicles, comprising a power socket assembly according to any of the preceding claims.

## Patentansprüche

1. Steckdosenaufbau einer Ladestation zum Wiederaufladen von Batterien von elektrischen Fahrzeugen, mit:
einem Deckel (17), der um eine Achse (y) schwenkbar ist, um eine Steckdose (12) abzudecken;
einem ersten Verriegelungsbauteil (24) zum Verriegeln eines Anschlusses (A), der während des Ladens in die Steckdose (12) eingeführt ist;
einem zweiten Verriegelungsbauteil (21) zum lösbaren Verriegeln des Deckels (17) in eine geschlossene Position, bei der die Steckdose (12) abgedeckt ist;
einem Betätigungsmittel zum Bewegen des ersten und zweiten Verriegelungsbauteils zwischen verriegelten Positionen, in denen die Verriegelungsbauteile mit der Steckdose und dem Deckel in Eingriff sind, und nicht-verriegelten Positionen, in denen die Verriegelungsbauteile nicht mit der Steckdose und dem Deckel in Eingriff sind;
wobei das Betätigungsmittel einen einzelnen linearen Betätiger (23) aufweist,
das erste Verriegelungsbauteil (24) und das zweite Verriegelungsbauteil (21) beide integriert mit einem einzelnen Verschluss (22) ausgebildet sind, der von dem Betätiger (23) gesteuert wird, wobei das erste Verriegelungsbauteil (24) sich in Richtung der Achse (y) erstreckt und das zweite Verriegelungsbauteil (21) sich in einer entgegengesetzten Richtung von der Achse (y) weg erstreckt; **dadurch gekennzeichnet, dass**
die Verriegelungsbauteile (24, 21) derart konfiguriert sind, dass, wenn das erste Bauteil (24) in der verriegelten Position ist, das zweite Bauteil (21) in der nicht-verriegelten Position ist, und umgekehrt.

2. Steckdosenaufbau nach Anspruch 1, **dadurch gekennzeichnet, dass** der schwenkbare Deckel (17) um die Achse (y) an einem oberen Ende eines Trägerrahmens (10) geschwenkt wird, der die Steckdose (12) oder mindestens einen Sitz (13, 14) zur Montage der Steckdose (12) vorsieht, und der lineare Betätiger (23) und der Verschluss (22) auf dem Rahmen unterhalb der Steckdose montiert sind.

3. Steckdosenaufbau nach Anspruch 2, bei dem das erste Verriegelungsbauteil (24) sich von einem oberen Bereich des Verschlusses (22) nach oben erstreckt, und das zweite Verriegelungsbauteil (21) sich von einem oberen Bereich des Verschlusses (22) nach unten erstreckt.

4. Steckdosenaufbau nach Anspruch 2 oder 3, **dadurch gekennzeichnet, dass** der Verschluss (22) in der Art und Weise eines im Wesentlichen rechteckigen Rands geformt ist, der auf einer Seite (15) des Rahmens (10) um den linearen Betätiger (23) herum verschiebbar montiert ist.

5. Steckdosenaufbau nach Anspruch 4, **dadurch gekennzeichnet, dass** der Verschluss (22) eine Form aufweist, die im Wesentlichen symmetrisch ist bezüglich der Aktionslinie des linearen Betätigers (23).

6. Steckdosenaufbau nach einem der vorangegangen Ansprüche, **dadurch gekennzeichnet, dass** das erste Verriegelungsbauteil (24) und das zweite Verriegelungsbauteil (21) einstückig mit dem Verschluss (22) ausgebildet sind.

7. Steckdosenaufbau nach einem der vorangegangenen Ansprüche, **dadurch gekennzeichnet, dass** der lineare Betätiger (23) ein linearer Betätiger vom elektromagnetischen Solenoidtyps ist.

8. Steckdosenaufbau nach Anspruch 7, **dadurch gekennzeichnet, dass** der lineare Betätiger vom elektromechanischen Solenoidtyp einen Elektromagneten (35) und einen beweglichen Anker (28) aufweist, der mit einem unteren Bereich (26) des Verschlusses (22) verbunden ist, um dessen Anheben zu veranlassen, wenn der Elektromagnet mit Energie versorgt wird.

9. Steckdosenaufbau nach einem der vorangegangenen Ansprüche, **gekennzeichnet durch** ein Federbauteil (25), das auf den Verschluss (22) eine Kraft ausübt, die von der Steckdose (12) weg gerichtet ist, um das ersten Verriegelungsbauteil (24) von dem Stecker (A) zu lösen und das zweite Verriegelungsbauteil (12) mit einem Sitz (18) des Deckels (17) in Eingriff zu bringen.

10. Steckdosenaufbau nach Anspruch 9, **gekennzeichnet durch** einen abgekanteten oder abgerundeten Bereich (19a, 21a) auf dem Verschluss (22) und/oder dem Deckel (17), wobei eine Schließbewegung des Deckels zu einem Anstoßen des abgekanteten oder abgerundeten Bereichs zwischen dem Verschluss und dem Deckel führt, wodurch als Ergebnis der Verschluss gegen die Vorspannung des Federbauteils angehoben und dann das zweite Verriegelungsbauteil (21) mit den Sitz (18) des Deckels (17) in Eingriff gebracht wird.

11. Steckdosenaufbau nach Anspruch 2, **dadurch gekennzeichnet, dass** folgendes ebenfalls an dem Rahmen (10) befestigt ist:
eine Sensorvorrichtung (29), die mit einem Bauteil (31) interagiert, das an dem Deckel (17) befestig ist, zum Detektieren des Offen/Geschlossen-Zustands des Deckels;
eine Schaltervorrichtung (30), die von dem Verschluss (22) geschaltet werden kann, wenn der Verschluss die Position erreicht, die einer Verriegelung des ersten Verriegelungsbauteils (24) mit dem Stecker (A) entspricht.

12. Steckdosenaufbau nach Anspruch 11, **dadurch gekennzeichnet, dass** der Verschluss (22) auch einen Vorsprung (33) aufweist zur Betätigung der Schaltervorrichtung (30).

13. Ladestation zum Wiederaufladen von Batterien von elektrischen Fahrzeugen, mit einem Steckdosenaufbau nach einem der vorangegangenen Ansprüche.

## Revendications

1. Ensemble de prise électrique d'une station pour recharger les batteries de véhicules électriques, comprenant :
un couvercle (17) monté pivotant autour d'un axe (y) de façon à recouvrir une prise (12),
un premier élément de verrouillage (24) pour verrouiller un connecteur (A) introduit dans la prise (12) pendant le rechargement,
un deuxième élément de verrouillage (21) pour verrouiller le couvercle (17) de façon déblocable dans une position de fermeture recouvrant la prise (12),
des moyens d'actionnement pour déplacer les premier et deuxième éléments de verrouillage entre des positions de verrouillage dans lesquelles les éléments de verrouillage sont engagés dans le connecteur et le couvercle, et des positions de déblocage dans lesquelles les éléments de verrouillage sont dégagés du connecteur et du couvercle,
les moyens d'actionnement comprenant un seul actionneur linéaire (23),
le premier élément de verrouillage (24) et le deuxième élément de verrouillage (21) étant tous les deux solidaires d'un seul loquet (22) commandé par l'actionneur (23), le premier élément de verrouillage (24) s'étendant vers l'axe (y) et le deuxième élément de verrouillage (21) s'étendant dans une direction opposée, s'éloignant de l'axe (y), **caractérisé en ce que**
les éléments de verrouillage (24, 21) sont configurés d'une telle façon que, lorsque le premier élément (24) est dans la position de verrouillage, le deuxième élément (21) est dans la position de déblocage, et vice versa.

2. Ensemble de prise électrique selon la revendication 1, **caractérisé en ce que** le couvercle (17) monté de façon pivotante est monté pivotant autour l'axe (y) à une extrémité supérieure d'un cadre de support (10) qui met à disposition la prise (12) ou pour le moins un siège (13, 14) pour monter la prise (12) et **en ce que** l'actionneur linéaire (23) et le loquet (22) sont montés sur le cadre en-dessous de la prise.

3. Ensemble de prise électrique selon la revendication 2, **caractérisé en ce que** le premier élément de verrouillage (24) s'étend vers le haut à partir d'une partie supérieure du loquet (22) et **en ce que** le deuxième élément de verrouillage (21) s'étend vers le bas à partir d'une partie supérieure du loquet (22).

4. Ensemble de prise électrique selon la revendication 2 ou 3, **caractérisé en ce que** le loquet (22) présente la forme d'un bord sensiblement rectangulaire monté de façon coulissante sur un côté (15) du cadre (10) autour de l'actionneur linéaire (23).

5. Ensemble de prise électrique selon la revendication 4, **caractérisé en ce que** le loquet (22) présente une forme sensiblement symétrique par rapport à la ligne d'actionnement de l'actionneur linéaire (23).

6. Ensemble de prise électrique selon l'une des revendications précédentes, **caractérisé en ce que** le premier élément de verrouillage (24) et le deuxième élément de verrouillage (21) sont formés en une seule pièce avec le loquet (22).

7. Ensemble de prise électrique selon l'une des revendications précédentes, **caractérisé en ce que** l'actionneur linéaire (23) est un actionneur de type à commande électromagnétique.

8. Ensemble de prise électrique selon la revendication 7, **caractérisé en ce que** l'actionneur linéaire de type à commande électromagnétique comprend un électro-aimant (35) et une armature mobile (28) connectés à une partie inférieure (26) du loquet (22) de façon à causer une remontée de celui-ci lorsque l'électro-aimant est alimenté en énergie.

9. Ensemble de prise électrique selon l'une des revendications précédentes, **caractérisé en ce qu'**il comprend un élément de ressort (25) appliquant sur le loquet (22) une force qui est déviée de la prise (12) pour dégager le premier élément de verrouillage (24) du connecteur (A) et pour engager le deuxième élément de verrouillage (21) dans un siège (18) du couvercle (17).

10. Ensemble de prise électrique selon la revendication 9, **caractérisé en ce qu'**il comprend en outre une partie en biseau ou arrondie (19a, 21a) sur le loquet (22) et/ou le couvercle (17), ce par quoi un mouvement de fermeture du couvercle entraîne que la partie en biseau ou arrondie bute entre le loquet et le couvercle dont il résulte que le loquet est soulevé à l'encontre de la précontrainte de l'élément de ressort et que, ensuite, le deuxième élément de verrouillage (21) s'engage dans le siège (18) du couvercle (17).

11. Ensemble de prise électrique selon la revendication 2, **caractérisé en ce qu'**est également monté sur le cadre (10) ce qui suit :
- un dispositif capteur (29) qui coopère avec un élément (31) monté sur le couvercle (17) pour détecter l'état ouvert/fermé du couvercle,
- un dispositif commutateur (30) apte à être commuté par le loquet (22) lorsque le loquet atteint la position correspondant au verrouillage du premier élément de verrouillage (24) dans le connecteur (A).

12. Ensemble de prise électrique selon la revendication 11, **caractérisé en ce que** le loquet (22) comprend aussi une saillie (33) pour actionner le dispositif commutateur (30).

13. Station pour recharger les batteries de véhicules électriques, comprenant un ensemble de prise électrique selon l'une des revendications précédentes.
